# EUROPÄISCHE PATENTSCHRIFT

(11) **EP 1 052 166 B1**
(45) Veröffentlichungstag und Bekanntmachung des Hinweises auf die Patenterteilung: **26.07.2006**
(21) Anmeldenummer: 00107956.5
(22) Anmeldetag: 17.04.2000
(51) Int. Cl.: B62D 65/00

(54) **Kunststoffscheiben-Rahmen-Anordnung mit einer Kunststoff-Fensterscheibe und einem den Rahmen bildenden Karosserieflansch eines Kraftfahrzeugs**
Plastic sheet-frame-arrangement with a plastic window sheet and a car body flange of a vehicle forming the frame
Arrangement-panneau en plastique transparent-cadre avec une fenêtre à panneau en plastique transparent et un flasque de carosserie d'un véhicule formant le cadre

(30) Priorität: 08.05.1999 DE 19921481
(43) Veröffentlichungstag der Anmeldung: 15.11.2000
(73) Patentinhaber: Volkswagen Aktiengesellschaft, 38436 Wolfsburg (DE)
(72) Erfinder: Hacker, Roland, Dipl.-Ing., 38550 Isenbüttel (DE)

(56) Entgegenhaltungen:
- EP-A- 0 415 716
- DE-A- 19 642 648
- US-A- 3 819 226

## Beschreibung

Die Erfindung betrifft eine Anordnung gemäß dem Oberbegriff des Patentanspruchs 1.

Eine derartige Anordnung ist aus der gattungbildenden DE 196 42 648 A1 bekannt. Die mit der Scheibe einteiligen Erhebungen dienen entweder der Unterstützung der Befestigung der Scheibe an einer Fahrzeugkarosserie oder als Haltenoppen zur Befestigung abnehmbarer Zusatzausrüstungsteile, wie Jalousien, Parkscheiben oder dergleichen. Die Befestigung der Scheibe soll dabei über Kleberraupen erfolgen.

Die DE 36 04 389 A1 offenbart eine festeingebaute Scheibe für Kraftfahrzeuge, wobei die Scheibe im Bereich ihres Randes mit einer anhaftenden Dichtung und diese mit clipsartigen Halteorganen versehen ist, die mit Hinterschneidungen die Ränder von Löchern in einem Flansch hintergreifen. Weitere nach innen gerichtete Hinterschneidungen dienen zur Arretierung von Pfeilprofilen an einer starren Abdeckleiste.

Die DE 198 35 877 A1 schließlich befaßt sich mit dem Problem der thermischen Abmessungsänderung von Harzfensterpaneelen, insbesondere solchen, die zur Gewinnung eines Fahrzeug-Sonnendachs dienen sollen. Diese Schrift lehrt die Verwendung von Verstärkungselementen, die ihrerseits mit dem Hauptkörper des Fahrzeugs verbunden sind. Die Verstärkungen sind mit rechteckförmigen Durchtrittslöchern für Befestigungsmittel nach Art von Spreizclipsen an dem Harzfensterpaneel versehen; diese Clipse hintergreifen wiederum Randbereiche dieser Öffnungen. Dabei ist zwischen Öffnungsrändern einerseits und zugekehrten Seitenbereichen der Clipse andererseits Spiel zur Aufnahme von thermischen Abmessungsänderungen vorgesehen. Die Befestigung von Abdeckleisten ist nicht angesprochen.

Vor allem zur Herstellung von Fensterscheiben für Kraftfahrzeug-Karosserien ist es bekannt, Kunststoffe, insbesondere ein Polycarbonat, zu verwenden. Der Erfindung liegt die Aufgabe zugrunde, eine Anordnung zur Befestigung einer derartigen Kunststoffscheibe zu schaffen, die ohne Verwendung eines Klebers auskommt, leicht herstell- und aufhebbar ist und mit konstruktiv einfachen Ergänzungen die Befestigung auch einer Abdeckleiste erlaubt.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Ein besonderer Vorteil der Erfindung ist darin zu sehen, daß sie mit für sich bekannten und bewährten Arretiermitteln, wie Spreizstegen oder Muttern, Scheiben und Schiebern, auskommt. Entsprechendes gilt für die Ausbildung der Steckhalterungen für die Abdeckleiste, die im wesentlichen nur Fortsätze an der Abdeckleiste und mit diesen zusammenwirkende stirnseitige Vertiefungen oder Umfangsbereiche an den Zapfen enthält.

Drei Ausführungsbeispiele der Erfindung werden im folgenden anhand der Zeichnung erläutert, deren Figuren Horizontalschnitte durch den Befestigungsbereich einer Kraftfahrzeug-Fensterscheibe an einem Karosserieflansch wiedergeben.

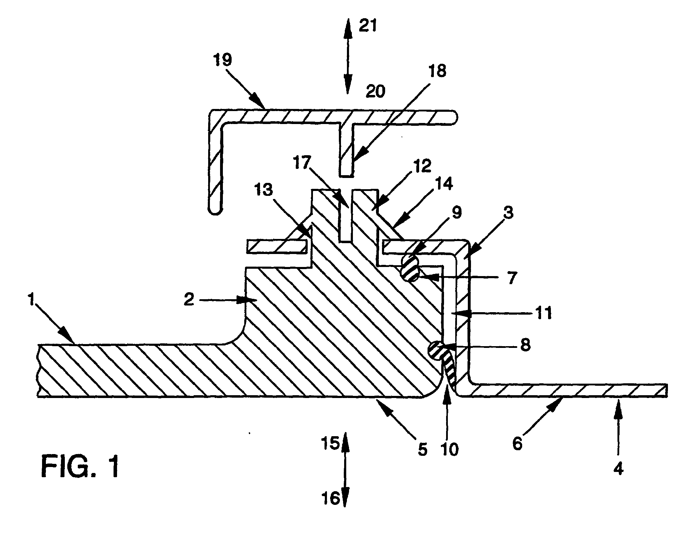

Betrachtet man zunächst Figur 1, so erkennt man bei 1 die aus einem Polycarbonat gefertigte Kunststoff-Fensterscheibe mit dem Randbereich 2, der zur lösbaren Befestigung an dem Karosserieflansch 3 ausgebildet ist. Der Karosserieflansch 3 ist gegenüber dem Karosserieseitenteil 4 derart versenkt angeordnet, daß die Außenfläche 5 der Scheibe 1 mit der Außenfläche 6 des Karosserieseitenteils 4 fluchtet und so eine Fahrzeugaußenseite bildet, die strömungsgünstig gestaltet ist.

Ehe auf die eigentliche Befestigung der Scheibe 1 am Karosserielflansch 3 eingegangen wird, sei darauf hingewiesen, daß der randnahe Scheibenbereich 2 bei 7 und 8 Vertiefungen zur Aufnahme von elastischen Dichtungen 9 und 10 aufweist, die den Spalt 11 zwischen Scheibe 1 einerseits und Karosserie andererseits abdichten.

Betrachtet man nun die Mittel zur Befestigung der Scheibe 1 am Karosserieflansch 3, so sind eine Vielzahl von Zapfen 12 vorgesehen, die in diesem Ausführungsbeispiel materialeinheitlich mit der Scheibe 1 sind und senkrecht zur Hauptebene derselben weisen. Sie durchsetzen individuelle Durchstecklöcher 13 im Karosserieflansch 3 und tragen auf ihrem Umfang Spreizstege 14, die sich nach dem Durchstecken der Zapfen 12 durch die Durchstecklöcher 13 hinter den Karosserielflansch 3 legen, so daß dieser zwischen den Stirnseiten der Spreizstege 14 einerseits und der Dichtleiste 9 andererseits gleichsam elastisch eingespannt ist und eine Bewegung der Scheibe 1 von dem Karosserieflansch weg (in Figur 1 also nach unten) verhindert ist. Auf der anderen Seite ist eine Demontage der Scheibe 1 leicht durch manuelles oder mittels eines Werkzeugs vorgenommenes Zusammendrücken der Klemmstege 14 möglich. Die Durchstecklöcher 13 besitzen also einen entsprechend großen Durchmesser.

In Figur 1 ist durch den Pfeil 15 die Bewegung der Scheibe 1 relativ zum Karosserieseitenteil 4 bei der Montage der Scheibe, dagegen durch den Pfeil 16 die entsprechende Relativbewegung bei der Demontage der Scheibe angedeutet.

Auf ihren Stirnseiten sind die Zapfen 12 mit Vertiefungen 17 zur klemmenden Aufnahme von Fortsätzen 18 an der Abdeckleiste 19 versehen, die nach Montage der Scheibe 1 an dem Karosserieseitenteil 4 aufgesteckt wird. Die entsprechende Bewegung der Abdeckleiste 19 ist durch den Pfeil 20, ihre Bewegung zur Demontage, die vor der Demontage der Scheibe 1 (Zusammendrücken der Spreizstege 14) erfolgen muß, durch den Pfeil 21 angedeutet.

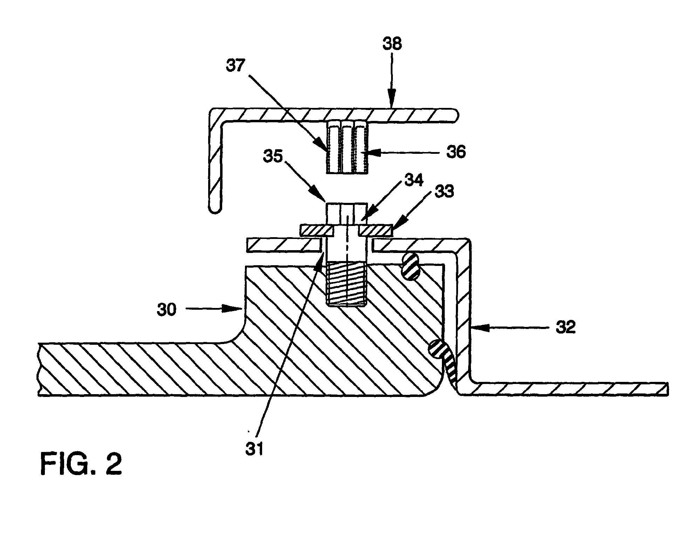

Während bei dieser Ausführungsform der Erfindung also zur Herstellung der Befestigungsverbindungen für Scheibe 1 und Abdeckleiste 19 keine zusätzlichen Teile erforderlich sind, ist bei der Ausführungsform nach Figur 2 zur Befestigung der Scheibe 30 an dem wiederum mit Durchstecklöchern 31 versehenen Karosserieflansch 32 eine Sicherungsscheibe 33 vorgesehen, an deren Stelle auch eine Mutter treten kann und die nach Durchstecken oder Einschrauben von die Zapfen 12 in Figur 1 ersetzenden Schraubzapfen 34 auf eine umfangseitige Vertiefung der Schraubzapfen 34 geschoben oder auf einen Gewindebereich aufgeschraubt wird.

Der Schraubzapfen 34 trägt keinen Schraubenkopf, sondern zum Ansetzen eines Schraubwerkzeugs ein Mehrkantprofil 35, das zugleich zum Aufschieben eines mit einer in der Form angepaßten Ausnehmung 36 versehenen Fortsatzes 37 an der Abdeckleiste 38 dient.

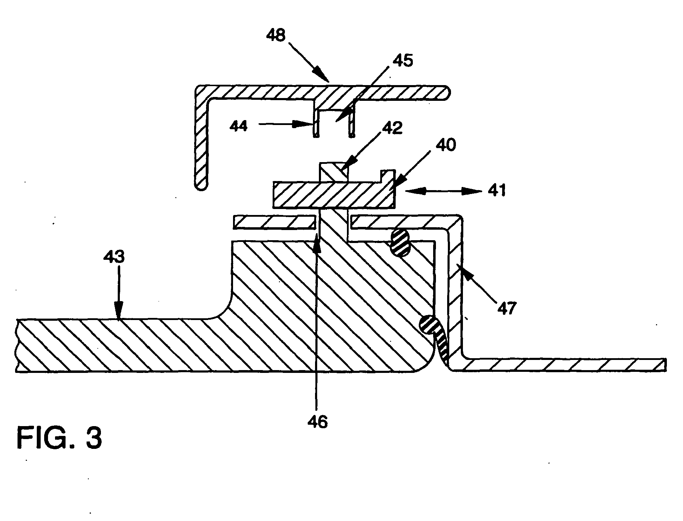

Auch in dem Ausführungsbeispiel nach Figur 3 ist ein zusätzliches Bauteil als Arretiermittel in Gestalt des Stiftes oder Schiebers 40 vorgesehen, der gemäß dem Doppelpfeil 41 auf den hier wieder materialeinheitlichen Stift 42 an der Scheibe 43 aufgeschoben bzw. abgezogen werden kann. Auch hier ist der Fortsatz 44 mit einer Ausnehmung 45 versehen, die auf das freie Ende des Zapfens 42 zur Herstellung einer Klemmverbindung aufgeschoben wird.

Zur Befestigung der Scheibe 43 werden also die verschiedenen Zapfen 42 durch Durchstecklöcher 46 im Karosserieflansch 47 hindurchgesteckt, dann werden die Arretiermittel 40 in Figur 3 von rechts nach links auf den mit einer Vertiefung versehenen Umfang des jeweiligen Zapfens 42 aufgeschoben oder, im Falle eines Sperrstifts, in ein Querloch des Zapfens 42 eingesetzt, und anschließend wird die Abdeckleiste 48 aufgesteckt. Bei der Demontage erfolgen diese Montageschritte verständlicherweise in umgekehrter Reihenfolge.

Mit der Erfindung ist demgemäß eine gattungsgemäße Befestigungsanordnung geschaffen, die montage- und demontagefreundlich ist und deren Konstruktion sich durch Robustheit auszeichnet.

## Patentansprüche

1. Kunststoffscheiben-Rahmen-Anordnung mit einer Kunststoff-Fensterscheibe (1) und einem den Rahmen bildenden Karosserieflansch (3) eines Kraftfahrzeugs, deren Scheibe (1) auf einem randnahen Bereich (2) quer zu ihrer Hauptebene weisende Erhebungen (12) aufweist, **dadurch gekennzeichnet, dass** die Erhebungen Zapfen (12) sind und der Karosserieflansch (3) in einem Auflagebereich für den randnahen Bereich (2) der Scheibe (1) Durchstecklöcher (13) für die Zapfen (12) aufweist, denen den Auflagebereich nach Durchstecken der Zapfen (12) hintergreifende Arretiermittel (14) zugeordnet sind, und dass eine Abdeckleiste (19) vorgesehen ist mit Fortsätzen (18), die zusammen mit den freien Enden der Arretiermittel (14) Steckhalterungen für die Abdeckleiste (19) bilden.

2. Anordnung nach Anspruch 1, **dadurch gekennzeichnet, dass** der Auflagebereich des Karosserieflansches (3) gegenüber einem anschließenden Karosserieseitenteil (4) derart zurückgesetzt ist, dass dieser und die den Zapfen (12) abgekehrte Fläche (5) der Scheibe (1) fluchten.

3. Anordnung nach Anspruch 1 oder 2, **dadurch gekennzeichnet, daß** der randnahe Bereich (3) der Scheibe (1) Vertiefungen (7, 8) zur Aufnahme von Dichtungen (9, 10) aufweist.

4. Anordnung nach einem der Ansprüche 1 bis 3, **dadurch gekennzeichnet, daß** die Arretiermittel Spreizstege (14) auf dem Umfang der Zapfen (12) enthalten.

5. Anordnung nach einem der Ansprüche 1 bis 3, **dadurch gekennzeichnet, daß** die Arretiermittel auf den Zapfen (34) lösbar festgelegte Teile (33) enthalten.

6. Anordnung nach Anspruch 5, daß die Teile Muttern sind.

7. Anordnung nach Anspruch 5, **dadurch gekennzeichnet, daß** die Teile Sicherungsscheiben (33) sind.

8. Anordnung nach Anspruch 5, **dadurch gekennzeichnet, daß** die Teile Sperrstifte oder Schieber (40) sind.

9. Anordnung nach einem der Ansprüche 1 bis 8, **dadurch gekennzeichnet, daß** die freien Enden der Zapfen (12) mit Vertiefungen (17) zur klemmenden Aufnahme der Fortsätze (18) versehen sind.

10. Anordnung nach einem der Ansprüche 1 bis 9, **dadurch gekennzeichnet, daß** die Zapfen (12) materialeinheitlich an die Scheibe (1) angeformt sind.

11. Anordnung nach einem der Ansprüche 1 bis 9, **dadurch gekennzeichnet, daß** die Zapfen Schraubzapfen (34) sind.

12. Anordnung nach Anspruch 10 oder 11, **dadurch gekennzeichnet, daß** die Fortsätze (44) stirnseitige Ausnehmungen (45) zum klemmenden Aufschieben auf die freien Enden der Zapfen (42) aufweisen.

## Claims

1. Plastic sheet-frame arrangement with a plastic window sheet (1) and a car body flange (3) of a vehicle forming the frame, the sheet (1) of which arrangement has, on a region (2) in the vicinity of the edge, elevations (12) pointing transversely with respect to its main plane, **characterized in that** the elevations are studs (12), and, in a supporting region for that region (2) of the sheet (1) which is in the vicinity of the edge, the car body flange (3) has plug-through holes (13) for the studs (12), which plug-through holes are assigned locking means (14) engaging behind the supporting region after the studs (12) have been plugged through, and **in that** a covering strip (19) is provided having extensions (18) which, together with the free ends of the locking means (14), form plug-in mounts for the covering strip (19).

2. Arrangement according to Claim 1, **characterized in that** the supporting region of the car body flange (3) is set back in relation to an adjoining car body side part (4) in such a manner that the latter and that surface (5) of the sheet (1) which faces away from the studs (12) are aligned.

3. Arrangement according to Claim 1 or 2, **characterized in that that** region (2) of the sheet (1) which is in the vicinity of the edge has depressions (7, 8) for receiving seals (9, 10).

4. Arrangement according to one of Claims 1 to 3, **characterized in that** the locking means contain expanding webs (14) on the periphery of the studs (12).

5. Arrangement according to one of Claims 1 to 3, **characterized in that** the locking means contain parts (33) fixed releasably on the studs (34).

6. Arrangement according to Claim 5, **characterized in that** the parts are nuts.

7. Arrangement according to Claim 5, **characterized in that** the parts are securing washers (33).

8. Arrangement according to Claim 5, **characterized in that** the parts are blocking pins or slides (40).

9. Arrangement according to one of Claims 1 to 8, **characterized in that** the free ends of the studs (12) are provided with depressions (17) for receiving the extensions (18) in a clamping manner.

10. Arrangement according to one of Claims 1 to 9, **characterized in that** the studs (12) are integrally formed on the sheet (1) in the same material.

11. Arrangement according to one of Claims 1 to 9, **characterized in that** the studs are screw-type studs (34).

12. Arrangement according to Claim 10 or 11, **characterized in that** the extensions (44) have recesses (45) on the end side for pushing onto the free ends of the studs (42) in a clamping manner.

## Revendications

1. Arrangement de panneau en plastique et de cadre, comprenant un panneau de fenêtre en plastique (1) et un flasque de carrosserie (3) d'un véhicule automobile formant le cadre, dont le panneau (1) présente des rehaussements (12) tournés transversalement à leur plan principal sur une région (2) proche du bord, **caractérisé en ce que** les rehaussements sont des tenons (12) et le flasque de carrosserie (3) présente, dans une région d'appui pour la région (2) du panneau (1) proche du bord des trous traversants (13) pour les tenons (12), auxquels sont associés des moyens de blocage (14) venant en prise par l'arrière avec la région d'appui après le passage des tenons (12), et **en ce qu'**une baguette couvre-joint (19) est prévue, comprenant des saillies (18) qui forment conjointement avec les extrémités libres des moyens de blocage (14) des fixations d'enfichage pour la baguette couvre-joint (19).

2. Arrangement selon la revendication 1, **caractérisé en ce que** la région d'appui du flasque de carrosserie (3) est en retrait par rapport à une partie latérale (4) de la carrosserie s'y raccordant, de telle sorte qu'elle soit en affleurement avec la surface (5) du panneau (1) éloignée des tenons (12).

3. Arrangement selon la revendication 1 ou 2, **caractérisé en ce que** la région (2) du panneau (1) proche du bord présente des renfoncements (7, 8) pour recevoir des joints d'étanchéité (9, 10).

4. Arrangement selon l'une quelconque des revendications 1 à 3, **caractérisé en ce que** les moyens de blocage comprennent des nervures d'écartement (14) sur la périphérie des tenons (12).

5. Arrangement selon l'une quelconque des revendications 1 à 3, **caractérisé en ce que** les moyens de blocage comprennent des pièces (33) fixées de manière desserrable sur les tenons (34).

6. Arrangement selon la revendication 5, **caractérisé en ce que** les pièces sont des écrous.

7. Arrangement selon la revendication 5, **caractérisé en ce que** les pièces sont des rondelles de fixation (33).

8. Arrangement selon la revendication 5, **caractérisé en ce que** les pièces sont des chevilles d'arrêt ou des coulisseaux (40).

9. Arrangement selon l'une quelconque des revendications 1 à 8, **caractérisé en ce que** les extrémités libres des tenons (12) sont pourvues de renfoncements (17) pour recevoir par serrage les saillies (18).

10. Arrangement selon l'une quelconque des revendications 1 à 9, **caractérisé en ce que** les tenons (12) sont venus de matière avec le panneau (1).

11. Arrangement selon l'une quelconque des revendications 1 à 9, **caractérisé en ce que** les tenons sont des tenons filetés (34).

12. Arrangement selon la revendication 10 ou 11, **caractérisé en ce que** les saillies (44) présentent du côté frontal des évidements (45) devant être poussés par serrage sur les extrémités libres des tenons (42).
